# EUROPEAN PATENT APPLICATION

(11) **EP 0 560 510 A1**
(43) Date of publication of application: **15.09.1993**
(21) Application number: 93301393.0
(22) Date of filing: 25.02.1993
(51) Int. Cl.: G06F 1/28

(54) **Battery operated computer and method for managing battery power in battery operated computer**

(30) Priority: 13.03.1992 JP 54955/92
(71) Applicant: International Business Machines Corporation, Armonk, N.Y. 10504 (US)
(72) Inventor: Katoh, Yasumasa, Yamato-shi, Kanagawa-ken (JP); Kinoshita, Hiroyuki, Yokohama-shi, Kanagawa-ken (JP)
(74) Representative: Burt, Roger James, Dr.

(57) **Abstract**

The invention is a battery operated computer having a battery for powering said computer, a main processor for running application programs under the control of an operating system, a main memory for storing said application programs and said operating system, monitoring means for monitoring a battery power condition, and low battery warning means for indicating an operator of low battery power when said monitoring means detected that a predetermined low battery power warning condition related to a low battery power was reached, wherein said monitoring means can operate so as to alter said predetermined low battery power warning condition in response to a monitored battery power condition.

To provide adequate power monitoring for batteries which are under different charging conditions without providing a power monitoring circuit for the batteries themselves, so that the residual battery power can be effectively used to ensure that system down is not caused due to battery consumption.

## Description

The present invention relates to a data processing system, and more particularly to a battery power management system of a battery operated computer.

Some battery operated computers are constructed so as to beep to indicate low battery power if a battery voltage drops to a predetermined value as a result of battery discharge. When an operator perceives a warning beep, he can store data into a hard disk, replace the battery, or connect to an AC adapter to the computer before the battery operated computer becomes inactive. Further, a certain battery operated computer may have a suspend function (a function for interrupting the run of an application). This function suspends battery power discharge by stopping power supply to every part except main memory after storing information required to restart an application program in the main memory if a low battery voltage is reached during the run of the application program. A computerwith the suspend function usually transits to the suspend mode after a predetermined time (for example, one minute) has passed since a beep was commenced to indicate low battery power. When an operator perceives a warning beep, he can take such an action as storing data into a hard disk before the computer enters the suspend mode.

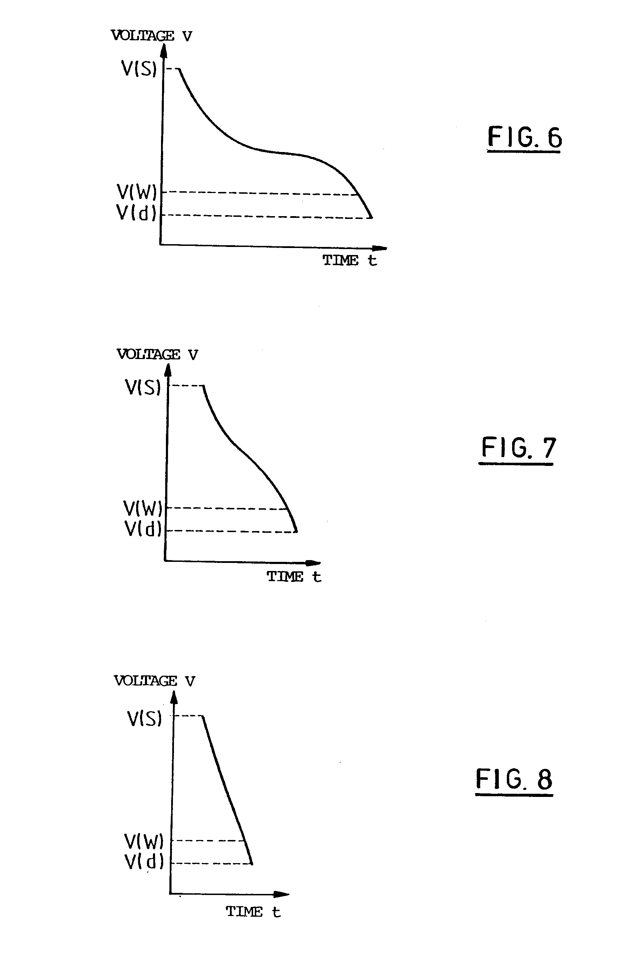

Fig.6 to Fig.8 are respectively curves showing variations in battery voltage over a period of time (discharge characteristics) of a fully charged battery, insufficiently charged battery, and a battery charged in short time (for example, a few minutes). In the figures, V(s) is a voltage at which discharge occurs. V(w) is a warning voltage and a computer beeps to an operator to indicate low battery power when a battery voltage reaches the warning voltage V(w). V(d) is a system down voltage and the computer to be operated by a battery becomes inoperable when a battery voltage reaches V(d). As shown in Fig.8, a battery rapidly recovers its voltage even if it is charged in a short time and its V(s) becomes the same as the V(s) of a fully charged battery (shown in Fig.6), but the voltage drop is sharper than the cases shown in Fig.6 and Fig.7.

If the warning voltage V(w) is set to a lower value, the computer can be,used over a longer period of time. This has actually the same effect in using a computer as extending the battery life. However, as shown in Fig.8, in the case of a battery charged in short time, a battery voltage drops fast after the voltage has reached the warning voltage V(w). Therefore, in case a battery charged in a short time is used, even if an operator tried to store data into a hard disk after a warning beep is commenced, a battery voltage may reach the system down voltage V(d) before data is written into the hard disk. Besides, even if a fully charged battery is used, the warning voltage V(w) cannot be set to a lower value, since there is no way to confirm that the fully charged battery is used.

Incidentally, such a configuration is already known that a battery itself has a battery power monitoring circuit comprising a processor, memory, etc, and still more, information about a battery power condition obtained as a result of monitoring is sent to computer. However, such a configuration comes out to a high cost of the battery. Still more, such a configuration enforces an interface between the battery and the computer to be complicated. Adding to that, a battery temperature often becomes higher than 70 degrees, and in case of a battery without a protecting circuit, a battery temperature can become higher than 100 degrees. So, there is a problem that a battery with a monitoring circuit tends to cause malfunction.

An object of the present invention is to provide a battery operated computer which can adequately monitor power of batteries in various charging conditions, without providing a power condition monitoring circuit for a battery itself.

To accomplish said object, a computer according to the present invention is constructed as a battery operated computer having a battery for powering said computer, a main processor for running application programs under the control of an operating system, a main memory for storing said application programs and said operating system, monitoring means for monitoring a power condition of said battery, and low battery warning means for notifying an operator of low battery power when said monitoring means detects that a predetermined low battery power warning condition related to the low battery power was reached, in which said monitoring means can be controlled so as to alter said predetermined low battery power warning condition in response to the monitored battery power condition.

Amethod for managing battery power in a battery operated computer according to the present invention commences a warning to notify an operator of low battery power upon the time when a predetermined low battery power condition related to the low battery power is reached, and changes said predetermined low battery warning condition according to a battery power condition.

### Brief Description of the Drawings

Fig.1 is a graph showing the change in warning voltages of batteries, of which discharge characteristics are different from one another in an embodiment of a method for monitoring battery power of a battery operated computer according to the present invention.
Fig.2 is a block diagram showing the overall configuration of the embodiment of the battery operated computer according to the present invention.
Fig.3 is a block diagram showing a battery selector of said embodiment.
Fig.4 is a flow chart showing processing for adjusting warning voltages in said embodiment.
Fig.5 is a graph showing the discharge characteristics of two batteries from which power is selectively supplied to the computer of said embodiment.
Fig.6 is a graph showing the discharge characteristic of a fully charged battery.
Fig.7 is a graph showing the discharge characteristic of an insufficiently charged battery.
Fig.8 is a graph showing the discharge characteristic of a battery which was charged for a short period.

### Description of the Preferred Embodiment

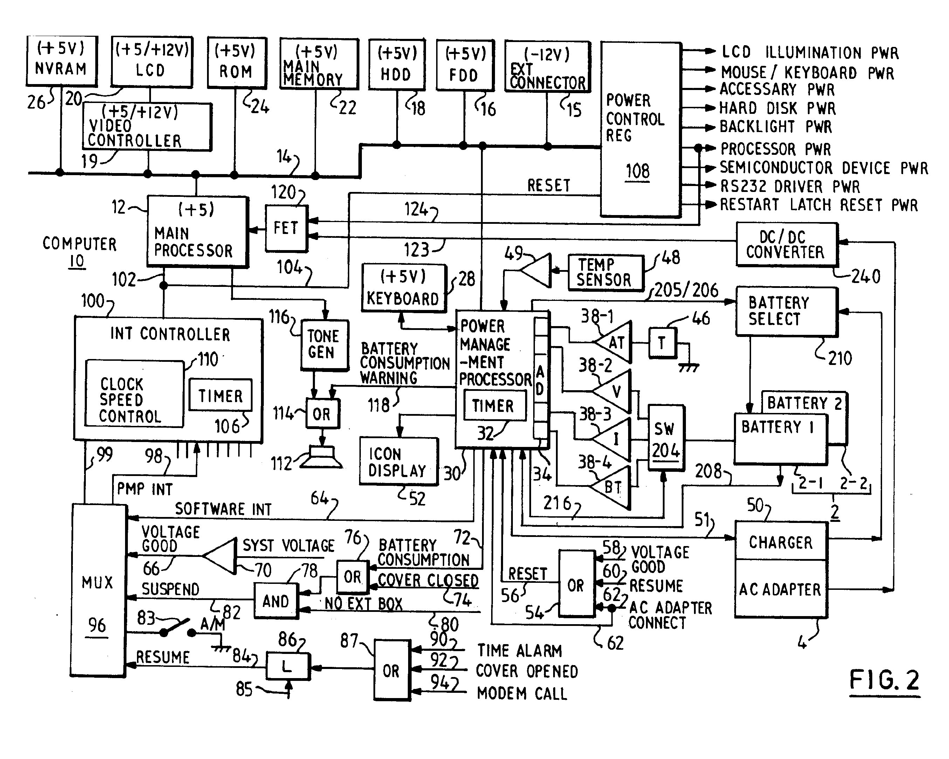

In the following, an embodiment of the present invention is described by reference to drawings. In Fig.2, a computer 10 operates by power supply from a battery 2 or an AC adapter 4. A main processor 12 runs application programs under the control of an operating system. The main processor 12 is INTEL 80386SX, etc., and the operating system is DOS or IBM OS/2. The main processor 12 is connected to a system bus 14, to which such I/0 devices as a backlight liquid crystal display (LCD) 20 through a video controller 19, a floppy disk drive (FDD) 16, and a hard disk drive (HDD) 18 are connected. The system bus 14 is connected also to a DRAM 22 as a main memory, a ROM 24 and a NVRAM 26 as a RAM with battery backup.

The FDD 16 has its own controller so that, during a period of time when FDD 16 is not accessed, no power is consumed. Power supply to the HDD 18 is terminated when operator specified time length has elapsed since the last access to the HDD 18. Power supply to the HDD 18 is restarted by the next access to the HDD 18. The LCD 20 uses two kinds of power for the blanking control of a LDC screen and backlight control. The DRAM 22 is a main memory of the computer 10 and stores application programs and the operating system. The ROM 24 stores various interrupt handlers. The NVRAM 26 stores system configuration information selected by the operator.

The system bus 14 connects to a power control register 108 and a power management processor 30. The power management processor 30 should preferably be a Hitachi 16-bit single chip controller IC 330/H8, and this IC has a RAM a ROM, eight analog input pins, a timer 32, and sixteen digital input/output pins as well as a 16-bit CPU on a single chip. The sixteen digital input/output pins are used to transmit signals between the power management processor 30 and devices controlled and monitored by the power management processor 30. The power management processor 30 is connected also to a keyboard 28 to monitor the operations of the keyboard 28. The power management processor 30 generates a key scan code corresponding to a depressed key. The power management processor 30 includes four internal registers which are not shown in the figure, and these internal registers are shared with the main processor 12.

The power management processor 30 monitors or measures the ambient temperature (AT), a battery voltage (V), a battery current (I), and a battery temperature (BT), and uses the obtained information for charging a battery and the power management of the entire computer 10. Information on the ambient temperature is measured by a thermometer 46, and an analog value thus obtained is inputted, through an operational amplifier 38-1, to an analog input pin of the power management processor 30. Information on a battery voltage V, a battery current and a battery temperature BT are inputted from a battery 2, through operational amplifiers 38-2, 38-3, and 38-4, to respective analog input pins of the power management processor 30. Furthermore, the power management processor 30 is connected to a humidity sensor 48 and a comparator 49. The comparator 49 provides a digital signal, indicating whetherthe internal humidity of the computer 10 is higher than a predetermined value or not, to the power management processor 30. If the internal humidity is higher than the predetermined value, the computer 10 cannot be powered on while it is powered off, and the computer 10 is not resumed while it is suspended.

The battery 2 comprises a first battery 2-1 and a second battery 2-2 (or battery pack), which can be independently installed in or removed from the computer 10. The batteries 2-1 and 2-2 are connected, through a switch 204, to the operational amplifiers 38-2, 38-3 and 38-4. through the switch 204 the battery 2-1 and 2-2 are alternately connected every 125 millisecond to the operational amplifiers 38-2, 38-3, and 38-4. The switch 204 is controlled, through a signal line 216, by the power management processor 30. The power management processor 30 can detect a voltage V, a current and a battery temperature BT of each of the first and second batteries 2-1 and 2-2. Further, as described later, from any one of the first and second batteries 2-1 and 2-2, which has a higher voltage V, power is supplied to the power management processor through a power line 208. The first and second batteries 2-1 and 2-2 should be preferably a chargeable battery such as nickel-cadmium(NiCad) battery or nickel-metal hydride(NiMH) battery. However, the present invention can be applied also to a computer provided with an unchargeable battery.

While power is supplied to the computer 10 from AC adapter 4, the battery 2 is to be charged. However, charging occurs only if an energy level of the battery 2 is lower than the fully charged level. Charging continues until the energy level of the battery 2 reaches the fully charged level. If the power management processor 30 determines that an energy level of the battery 2 is lower than the fully charged level, the power management processor 30 sends a signal through a signal line 51 to a charger 50 to turn the charger 50 to on. If the power management processor 30 determines that the battery 2 is fully charged, the power management processor 30 turns the charger 50 to off.

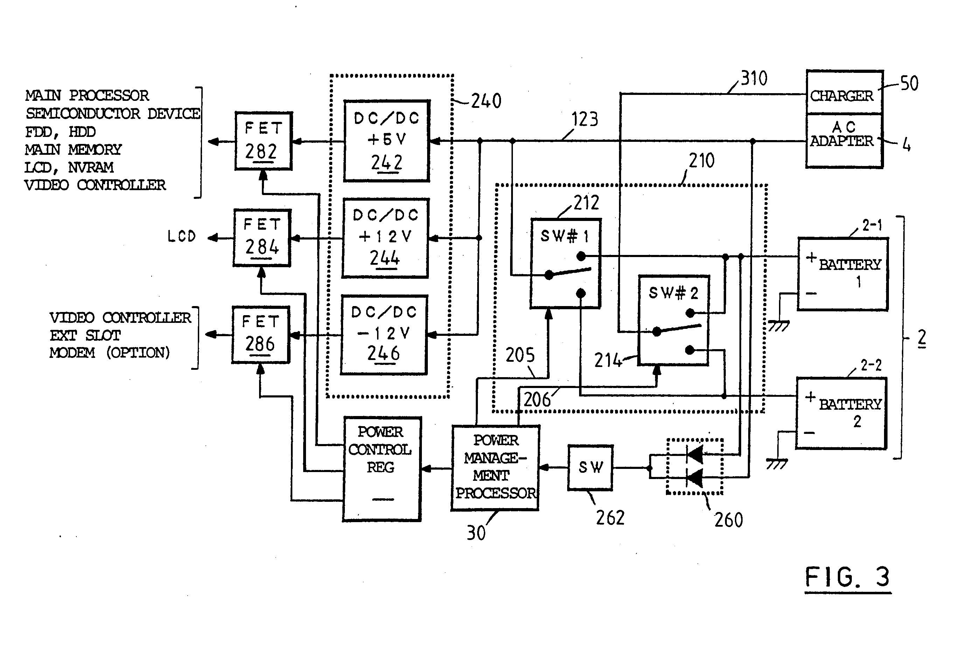

An OR gate 54 is used to reset the power management processor 30 according to any one of the following three input conditions. The three input conditions respectively happen (a) if a system voltage is good as when the charged battery 2 is mounted, (b) if a resume signal is responded to, and (c) if the AC adapter 4 is connected. Here, the system voltage is an output voltage (5V) of a DC/DC converter 242 shown in Fig.3. Such input conditions are indicated on signal lines 58, 60, and 62 respectively as a "voltage good" signal, a "resume" signal, and an "AC adapter connected" signal in figures. When the cover (not shown) of the computer 10 is closed, the computer 10 goes to a suspend state, and power supply to most parts is terminated. However, even while the cover is closed, the power management processor 30 is used to control charging of battery 2, and power supply to the power management processor 30 is continued. When the AC adapter4 is connected to the computer 10, the power management processor 30 is reset. A signal line 61 sends a signal indicating that the AC adapter 4 is connected to the computer 10.

The power management processor 30 controls an icon display 52. The icon display 52 is placed in some adequate place on the housing (not shown) of the computer 10 easy to see for the operator. The icon display 52 includes a luminous body for indicating (a) that the battery is being charged, (b) charging level, (c) the computer is in the suspend mode, and the like.

If the power management processor 30 detects that the battery 2 is consumed out and a battery voltage V dropped to the warning voltage V (w), the power management processor 30 transmits a warning signal over a signal line 118, and after a predetermined period of time (for example, one minute), transmits a "battery consumption" signal over a signal line 72. The warning voltage is described later in detail. The signal line 72 is connected to one of the inputs of an OR gate 76. Inputted to the other input of the OR gate 76 is a "cover closed" signal. The output of the OR gate 76 is connected to one of the inputs of an AND gate 78. Inputted to the other input of the AND gate 78 is an "extension box not linked" signal. The "Extension box not linked" signal is generated if an extension box (not shown) is not connected to the computer 10. Output of the AND gate 78 is transmitted as a "suspend (temporary stop)" signal over a signal line 82. The "suspend" signal is a control signal that allows the computer 10 to be in a suspend (temporary stop) state, and inputted to a multiplexer (MUX) 96. Under such a gate configuration, if at least one of conditions that the battery is consumed and the cover is closed establishes, and the extension box is not linked, then the computer 10 enters the suspend mode.

The MUX 96 includes multiple inputs. The MUX 96 monitors whether an input is active or not. If the MUX 96 detects that an input is active, the MUX 96 transmits an interrupt request signal ('MPM INT' signal) over a signal line 98. At the same time as the generation of the 'MPM INT' signal, the MUX 96 transmits a coded signal to specify which input is active, over a signal line 99. The signal lines 98 and 99 provide input to an interrupt controller 100. The interrupt controller 100 includes a timer 106 for controlling the backlight of the LCD 20. The timer 106 is reset when a keyboard or a mouse becomes active. When the timer 106 counts to a predetermined number, the LCD 20 is set to off. The interrupt controller 100 is connected, through a signal line 102, to the main processor 12. The main processor 12 performs interrupt processing for power management according to the type of an interrupt. The interrupt controller 100 is connected, through a signal line 104, to a power control register 108. The power control register 108 is reset at the time of power on after resume processing.

The MUX 96 and the power management processor 30 are connected to each other through a signal line 64. When software run by the power management processor 30 causes an interrupt, a'PMP software INT' signal becomes active on the signal line 64. The 'PMP software INT' signal becomes active at the time-out of a timer 32, at a high temperature above a predetermined temperature, and at the time of the consumption of the battery. A comparator 70 is connected to an input line 66 of the MUX 96. The comparator 70 has an input line 68, which receives an input signal indicating a system voltage. The input signal indicating a system voltage is compared with a predetermined value by the comparator 70. If the system voltage is at a normal level, the comparator 70 provides a 'voltage good' signal to the MUX 96 through the signal line 66. On the signal line 66, a signal becomes active when the charged battery 2 or t he AC adapter 4 is mounted.

An input line 84 of the MUX 96 is connected to a latch circuit 86. An input of the latch circuit 86 is connected to an output of an OR gate 87, and inputted to an input 90 of the OR gate 87 is a 'time alarm'signal. Inputted to an input 92 is a'cover open' signal. Inputted to an input 94 is a 'modem call' signal. Output of the latch circuit 86 is a 'resume' signal, which is a signal for switching the computer 10 from the suspend mode to the active mode. A 'Resume' signal becomes active when the cover is opened, a modem (not shown) is called, or a predetermined time is reached. Connected to the remaining input of the MUX 96 is an auto/manual switch 83. When the switch 83 is operated, a power management interrupt signal is generated.

When the battery 2 is being used, the computer 10 operates in two operating modes, active mode and suspend mode. In the active mode, the main processor 12 operates at a speed previously selected. The speed of the main processor 12 depends on the settings of the switch 83. An application program can set a Vcc input (the power pin of the main processor 12) to off to shut out power to the main processor 12. The main processor 12 is connected to a clock speed controller 110. The clock speed controller 110, which is a part of the interrupt controller 100, generates three types of clock speed of 5MHz, 10MHz, and 20MHz.

An OR gate 114 operates, in response to a signal from a tone generating circuit 116 or a signal line 118. A speaker 112 and the icon display 52, are warning means for warning low battery power. Although the speaker 112 generates a tone when a charged two third condition becomes a charged one third condition, if fully charged state is considered one. About one minute before transition into suspend mode, a tone changes according to each case. A tone generated about one minute before the transition into the suspended mode is, in this specification, called a beep for warning of battery consumption. It is preferable that data is written into the HDD 18 for one minute while a beep generates and then the computer 10 enters the suspend mode. Also when the computer 10 goes to the suspend mode and is resumed, a different tone generates. Besides, a beep of click sound from the keyboard is generated. The tone generating circuit 116 is controlled by the main processor 12.

Power supply to each device is controlled on or off by the settings of the power control register 108. The setting of the power control register 108 is controlled by the main processor 12 which runs an interrupt processing routine. The power control register 108 also performs a reset operation for the latch 86 through a reset signal line 85.

As shown in Fig.3, an output of the AC adapter4 is provided, through a power line 123, to a DC/DC converter group 240. The DC/DC converter group comprises DC/DC converters 242, 244, and 246 which respectively output +5 volt, +12 volt, and -12 volt. The +5 volt output of the DC/DC converter 242 is provided, through a FET 282, to the Vcc input pin of the main processor 12, various semiconductor logic circuits on system board, the FDD 16, the HDD 18, the main memory 22, the ROM 24, the video controller 19, and the NVRAM 26. The +12 volt output of the DC/DC converter 244 is provided, through a FET 284, to the LCD 20. The -12 volt output of the DC/DC converter 246 is provided, through a FET 286 to the extended connecter 15, the video controller 19, and a modem (option). Connected to respective control inputs of the FETs 282, 284, and 286 are output lines 124 from the power control register 108, the settings of which control on or off the FET 282, 284, and 286.

Referring to Fig.3, a battery selector 210 includes a first switch 212 and a second switch 214. Power output of the first battery 2-1 and the second battery 2-2 is selectively connected to the DC/DC converter group 240 by the first switch 212. A switching operation for the first switch 212 is performed by the power management processor 30 through a signal line 205. The power management processor 30 monitors voltage V of the first battery 2-1 and the second battery 2-2 and operates the first switch 212 so that one of the batteries whose voltage is higher than the other is connected to the DC/DC converter group 240. Once a battery is selected in this way, the first switch 212 cannot be switched until the selected battery is used up. The battery selected first is decided to be used up when its voltage V drops to a predetermined level which is much the same as a system down voltage V(d).

Power supply for the power management processor 30 is not done through the DC/DC converter group 240, but done from output power lines of the first and second batteries 2-1 and 2-2 through a pow- erselector 260 and a power on switch circuit 262. The power selector 260 comprises diodes connected in parallel in the same direction, and a power output of either the first battery 2-1 or the second battery 2-2 which has a higher voltage V is to be supplied to the power management processor 30. The power on switch circuit 262 is used to prevent power supply from the first battery 2-1 or the second battery 2-2 to the power management processor 30 during a period of time when the computer 10 is turned off.

Further, to the power lines of the first battery 2-1 and the second battery 2-2, a power supply line 310 from the battery charger 50 is to be selectively connected through the second switch 214. A switching operation for the second switch is performed by the power management processor 30. If the AC adapter 4 is connected to the computer 10, regardless of whether the power switch of the computer 10 is on or off, the battery 2-1 or2-2 is charged. Which one of the first and second batteries 2-1 and 2-2 is to be charged first is determined by the power management processor 30 based on a battery voltage V.

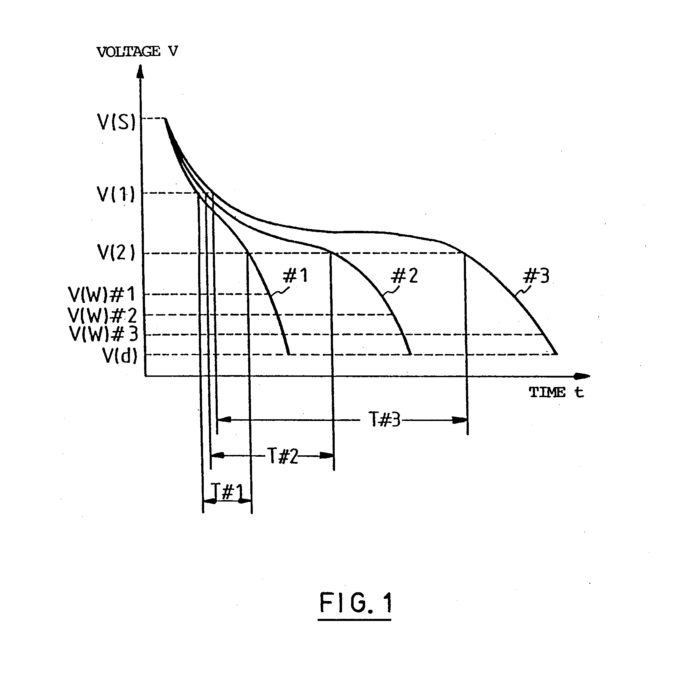

Fig.1 shows the discharge characteristics of the battery 2 (battery 2-1 or 2-2) at three different charging conditions. Discharge characteristic #1 shows the case where the battery is fully charged, discharge characteristic #3 shows the case where the battery is insufficiently charged, and discharge characteristic #1 shows the case where the battery is charged for a few minutes, in short time. In any case, discharge start voltages V(s) are almost at the same level. If the battery 2 is described as 12 V in the appropriate manual, etc., in each case of the discharge characteristics #1 to #3, a discharge start voltage V(s) is about 13 volt and drops in short time to about 12 volt.

In the embodiment, a period of time during which a voltage drops from a first predetermined voltage V(1) to a second predetermined voltage V(2) is measured. In Fig.1, periods of time during which a voltage drops from the first predetermined voltage V(1) to the second predetermined voltage V(2) in the discharge characteristics #1, #2, and #3 are T#1, T#2, T#3, respectively. The fully charged battery 2 has a period of time during which a voltage stays stable for relatively long time. That is, the fully charged battery 2 has an area in which a voltage slowly changes with time in comparison with other voltage areas. It is preferable that the first and second predetermined voltages V(1) and V(2) are selected respectively from voltage values near the upper limit and the lower limit of the area in which a voltage of the fully charged battery 2 slowly changes with time, in comparison with other voltage areas. Awarning voltage V(w) changes in response to a period of time during which a voltage V of the battery 2 drops from the first voltage V(1) to the second voltage V(2).

In Fig.1, if a period of time during which a voltage drops from the first predetermined voltage V(1) to the second predetermined voltage V(2) is T#1, T#2, and T#3, respectively, warning voltages are V(w)#1, V(w)#2, and V(w)#3, respectively. That is, if the battery 2 is fully charged, by setting a warning voltage V(w) low enough, actually the same effect is brought to an operator as the battery life itself is extended. Besides, if the battery 2 is charged for a short period such as a few minutes, by setting a warning voltage V(w) high, the operator can be certainly given a time to write data into the HDD 18, and etc., before the computer 10 enters the suspend mode. Conventionally a warning voltage V(w) could not be adjusted according to a charging condition of the battery 2, and therefore an intermediate value such as the second warning voltage V(w)#2 in Fig.1 was often used as a warning voltage V(w). And as a result, such cases happened as that warning is issued when there is left enough battery power, or, on the contrary, warning is issued too late. Incidentally, monitoring means for monitoring a power condition of the battery 2 includes the power management processor 30, a group of the operational amplifiers 38, and the switch 204.

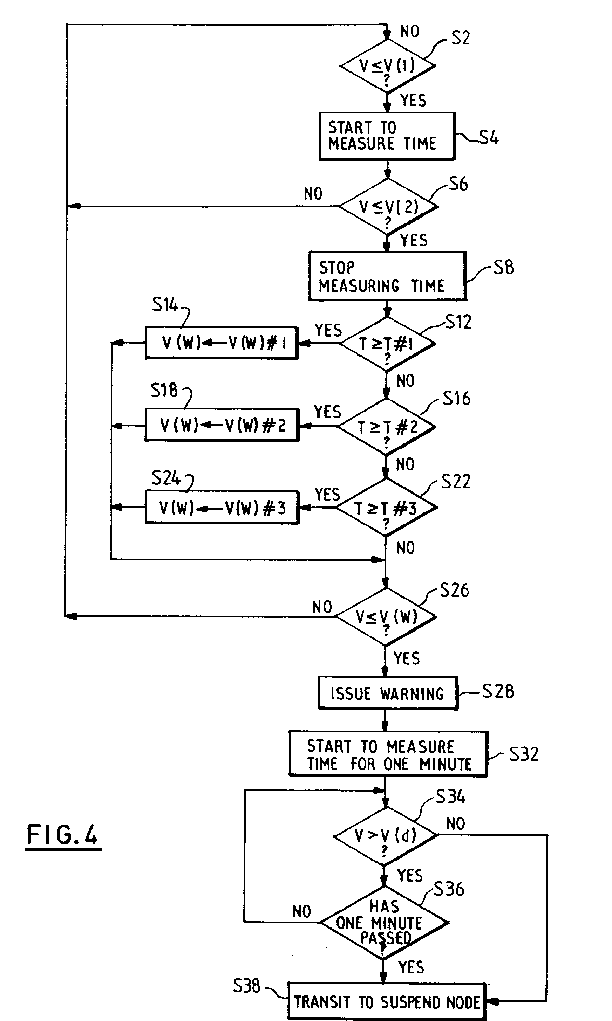

Fig.4 shows the operations of the power management processor 30 for adjusting a warning voltage V(w) according to a period of time during which a voltage drops from the first predetermined voltage V(1) to the second predetermined voltage V(2). In the figure a decision step S2 compares a battery voltage V with the first predetermined voltage V(1). If the battery voltage V becomes equal to the first predetermined voltage V(1), or lower than the first predetermined voltage V(1), a processing step S4 starts to count the number of clocks based on the timer 32 of the power management processor 30. A decision step S6 compares a battery voltage V with the second predetermined voltage V(2). If the battery voltage V becomes equal to the second predetermined voltage V(2), orlowerthan the second predetermined voltage V(2), a processing step S8 stops counting the number of clocks based on the timer 32 of the power management processor 30. A count at the time when clock number counting stops indicates a period of time T which is required when a battery voltage stops from the first predetermined voltage V(1) to the second predetermined voltage V(2).

A decision step S12 compares the time T with T#1, and if the time T is greater than or equal to the T#1, a processing step S14 sets a warning voltage V(w) to the first warning voltage V(w)#1. A decision step S16 compares the time T with the T#2, and if the time T is greater than or equal to the T#2, a processing step S18 sets a warning voltage V(w) to the second warning voltage V(w)#2, regardless of the setting in the processing step 14. A decision step S22 compares the time T with the T#3, and if the time T is greater than or equal to the T#3, a processing step S24 sets a warning voltage V(w) to the third warning voltage V(w)#3, regardless of the setting in the process step 18. When a warning voltage is thus set to any of the warning voltages V(w)#1 to V(w)#3, a decision step S28 compares the battery voltage V(w) and a set value of warning voltage V(w) with each other. If the battery voltage V is less than or equal to the set value of warning voltage V(w), the processing step S28 issues a warning beep from the speaker 112 and displays a visual warning on the icon display 52 to inform the operator of battery consumption.

If a warning (warning beep and warning display) is issued in the process step S28, a processing step S32 starts to activate the timer for a minute. Then, a decision step S34 determines whether the battery voltage V is higher than the system down voltage V(d) or not, and if the battery voltage V is not higher than the system down voltage V(d), a processing step S38 causes the computer 10 to be transited to the suspend mode. If the decision step S34 determined that the battery voltage V is higher than the system down voltage V(d), a processing step S36 determines whether one minute is passed or not. If one minute is not passed, the processing returns to the decision step 34, or if one minute is passed, the computer 10 is transited to the suspend mode in the step S38.

Fig.1 shows an example of a relation of the first predetermined voltage V(1), the second predetermined voltage V(2), and the warning voltage V(w) to a battery current I in a case where a battery whose voltage is 12 volt as indicated in the specifications is used as the battery 2. In Fig.1, the warning voltage V(w)#3 is equivalent to a value when the battery 2 is fully charged, that is, the third warning voltage V(w)#3 which is a warning voltage in the case where a period of time T is largerthan the third period of time T#3. As is obvious from Fig.1, if a battery current I is small, the first predetermined voltage V(1), the second predetermined voltage V(2), and the warning voltage V(w) is set to larger values than if a battery current I is large. This is because a battery voltage becomes smaller due to the consumed current through an internal resistance even if a residual power is the same for each battery. That is, those voltages are set to higher values to ensure that system down is prevented by taking voltage drop due to an internal resistance into account and residual battery power can be effectively used.

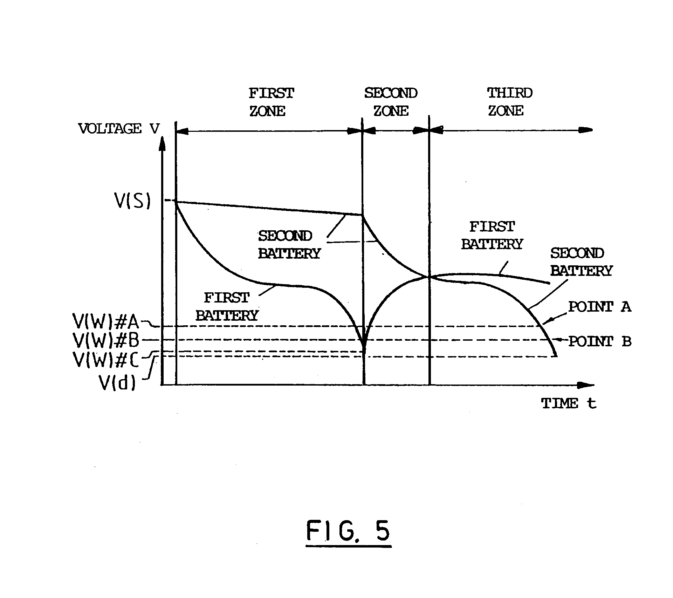

Fig.5 is provided to describe in detail an example of a method for monitoring power of the computer 10 provided with the first battery 2-1 and the second battery 2-2. In the case where two batteries 2-1 and 2-2 are provided for the computer 10, if a voltage of the first battery 2-1 is higher than a voltage of the second battery 2-2, the first battery 2-1 is used to operate the computer 10. As the result, a voltage of the first battery drops sooner than a voltage of the second battery, and only power supply to the power management processor 30 through the power selector 260 takes place from the second battery 2-2. Such a power supply is continued in the first zone of Fig.5. In the first zone, if a voltage of the first battery 2-1 drops to the warning voltage V(w), a warning is not issued and transition to the suspend mode in response to a degree of battery consumption does not occur.

After a voltage of t he first battery 2-1 drops to t he system down voltage, power is supplied to each part of the computer 10 from the second battery 2-2 instead of the first battery 2-1. Since a voltage of the second battery 2-2 is higher than a voltage of the first battery 2-1, power supply to the power management processor 30 takes place from the second battery 2-2. Such a power supply is continued in the second zone.

Avoltage of the first battery 2-1, which is stopped using, regains relatively rapidly, and sometimes becomes higher than a voltage of the second battery 2-2 whose voltage gradually drops. Such case is shown in the third zone. In the third zone, the first battery 2-1 supplies power to the power management processor 30, the second battery 2-2 supplies power to each part of the computer 10 except the power management processor 30. Awarning voltage V(w)#A indicated by a point A in Fig.5, is a warning voltage in the case where the first battery 2-1 is not supplying power to the power management processor 30, in other words, in the case where the second battery 2-2 is supplying power to each part of the computer 10 including the power management processor 30. Besides, a warning voltage V(w)#B indicated by a point B in Fig.5, is a warning voltage in the case where the first battery 2-1 is supplying power to the power management processor 30, and the second battery 2-2 is supplying power to each part of the computer 10 except the power management processor 30. Since the first battery 2-1 supplies power to the power management processor 30, the warning voltage V(w)#B can be set lower than the warning voltage V(w)#A.

As described above, according to the embodiment, since a condition that a warning is issued to indicate battery consumption is changed based on a battery charging state, actually the same effect as the lifetime of the battery is extended can be realized in using the battery, and, furthermore, a danger that an action for storing data is not completed due to battery consumption can be avoided. Besides, since a monitoring circuit for monitoring a battery power condition does not need to be provided to the side of battery, implementation is easy, and there is no danger of causing the malfunction of the monitoring circuit due to an elevated temperature of the battery. Further, since in the embodiment, the power selector 260 is provided, and even while one of the two batteries is used as a main power supply, a warning voltage can be set lower if the power management processor is supplied power from the other once used up, the effect that a battery usable time is extended can be obtained.

In the embodiment, two batteries are mounted. However, it will be appreciated that only one battery or three or more batteries may be mounted. A battery power condition which is monitored is indicated by the time period T during which a battery voltage drops from the first predetermined voltage V(1) to the second battery voltage V(2). However, it will be appreciated also that a battery power condition which is monitored is not limited to the time period and, for example, it may be indicated by a slope of the tangent to a discharge curve, which shows discharge characteristics at a certain voltage value, or it may be indicated by other conditions related to a current or power value. Further, a battery warning condition means that a battery voltage V reached a warning voltage V(w). However, it will be appreciated also that it may be indicated by other conditions related to a current or power value. Still further, a warning is not limited to a warning beep but it may be issued through visual warning means, etc.

## Claims

1. A battery operated computer having a main processor for running application programs under the control of an operating system, a main memory for storing said application programs and said operating system, monitoring means for monitoring a battery power condition, and low battery warning means for indicating low battery power when said monitoring means detects that a predetermined low battery power warning condition related to a low battery power is reached, wherein said monitoring means has means to alter said predetermined low battery power warning condition in response to a monitored battery power condition.

2. The battery operated computer according to claim 1, wherein said low battery power warning condition is a condition that a battery voltage has reached a predetermined low warning voltage, and said battery power condition to be monitored by said monitoring means is a condition which continues for a time length during which a battery voltage drops from a first predetermined voltage which is higher than said predetermined low warning voltage to a second predetermined voltage which is lower than said first predetermined voltage and higher than said warning voltage.

3. The battery operated computer according to claim 2, wherein said first predetermined voltage and said second predetermined voltage are changed in accordance with a value of current supplied by a battery.

4. The battery operated computer according to claim 1, 2 or 3, wherein said monitoring means include a power management processor, and multiple batteries can be mounted to or removed from the computer independently from one another, and said computer has a power selector for sup- pling power to the power management processor from a battery other than a battery which has the lowest voltage among multiple batteries, and said monitoring means can be operated so that said warning voltage is set to a lower value, if a battery supplying power to each part except the power management processor is different from a battery supplying power to the power management processor, than if a battery supplying power to each part except the power management processor is also supplying power to the power management processor.

5. Amethod for managing battery power in a battery operated computer, wherein a low battery power warning is issued to the operator if a predetermined battery warning condition caused by a low battery power is detected, and said predetermined battery warning condition is changed according to a battery power condition.

6. The method for managing battery power in the battery operated computer according to claim 5, wherein said predetermined battery warning condition is a condition that a battery voltage has reached a predetermined warning voltage, and the battery power condition monitored by said monitoring means is a condition which continues for a time length during which a battery voltage changes from a first predetermined voltage higher than said predetermined low warning voltage to a second predetermined voltage lower than said first predetermined voltage and higher than said warning voltage.
